# EUROPEAN PATENT APPLICATION

(11) **EP 4 592 146 A1**
(43) Date of publication of application: **30.07.2025**
(21) Application number: 24154521.9
(22) Date of filing: 29.01.2024
(51) Int. Cl.: B60R 19/18, B60R 19/34

(54) **CRASH MANAGEMENT SYSTEM FOR A VEHICLE WITH IMPROVED CRASH PROPERTIES**

(71) Applicant: Constellium Singen GmbH, 78224 Singen (DE)
(72) Inventor: SCHMID, Thomas, 78315 RADOLFZELL (DE); FRITZ, Klaus, 78315 RADOLFZELL (DE); GREILICH, Alexander, 78224 SINGEN (DE)
(74) Representative: Constellium - Propriété Industrielle

(57) **Abstract**

A crash management system for a motor vehicle, the vehicle having a longitudinal direction (X), a transverse direction (Y) extending perpendicular to the longitudinal direction (X), and a vertical direction (Z) extending perpendicular to a plane spanned by the longitudinal direction (X) and the transverse direction (Y), the crash management system comprising a bumper cross member extending along the transverse direction (Y) and having an outer belt, an inner belt and at least two transverse walls, which connect the outer belt to the inner belt and form a closed hollow profile, two crash boxes connecting said bumper cross member to a vehicle structure, wherein the outer belt comprises at least one opening next to one crash box in which at least one reinforcing element is inserted through the closed hollow profile, and wherein at least one reinforcing element comes into close contact with the inner belt.

## Description

### TECHNICAL FIELD OF THE INVENTION

The invention relates to a crash management system for a vehicle front or rear end of a motor vehicle, which enables particularly advantageous crash characteristics and structural integrity for the crash management system.

### BACKGROUND

A common motor vehicle comprises a body structure which intends to create a frame able to resist to impacts. In particular, the body structure comprises a left longitudinal support and a right longitudinal support, on the front end of which a crash management system is disposed. Left and right longitudinal support are also called left and right longitudinal beams or left- and right-side rails.

The term crash management system is generally used to describe the structural module consisting of the bumper cross member and the related attachments which connect the bumper cross member to the left- and right-side rails of the vehicle. The main goal of a crash management system is to prevent damages following a choc between a vehicle and an obstacle or between two vehicles.

The crash management system should be able to absorb energy at the start of a collision and to guide the remaining crash forces into the rest of the body structure.

A common crash management system includes a bumper cross member, typically extending laterally across the front or rear end of a vehicle, and crash boxes also known as shock absorbers or deformation elements or absorbers among others. Such crash box is interposed between said bumper cross member and the forward portion of the vehicle frame and/or body structure. The crash box is therefore both a member by which the bumper cross member is fixed to the front structure of the vehicle and a deformable member designed to absorb a certain amount of kinetic energy transferred from the bumper cross member in the event of an impact. The crash box is intended to plastically deform under compression by crumpling, or buckling in order to absorb the crash energy. The areas where the bumper cross member is joined with the crash box are known as areas of greatest weakness, particularly when an impact occurs.

US20110133519 A1 discloses a reinforcing element placed in a cross-member. The reinforcing element is disposed trough the cross-member height in the vertical direction. This configuration allows the overall reinforced crash management system to better absorb energy in the event of a crash or a collision, but this does not reinforce the weaken areas of the bumper cross member and does not allow the energy, generated in the event of an impact, to be transmitted efficiently to the crash boxes at the rear of the bumper cross-member.

There is a need to propose a crash management system maintaining flexibility and robustness and able to absorb energy of impact by deformation while avoiding fractures within the crash management system, thus breaking its overall unity, during impact and major damage.

### DESCRIPTION OF THE INVENTION

The present invention aims to propose a solution to the problems raised by the prior art. The problem to be solved by the invention is to increases the stiffness and the ability of the crash management system subjected to an impact to sustain higher amount of forces without material failure.

When a crash management system is subjected to an impact, a compressive load is applied to its front part generating a high level of stress on the inner wall of the bumper cross member, particularly where the bumper cross member is in contact with the crash box. Under this level of stress, the material weakens and may even tear. The crash box will thus not fold properly.

The crash management system according to the invention for a vehicle front or a vehicle rear of a motor vehicle having the features of claim 1 has the advantage that the at least one reinforcing element allows the bumper cross member to gain stability and to transmits reliably forces to the crash boxes and thus permits their robust folding behavior. The integrity of the crash management system is maintained even in the areas of greatest weakness as long as possible while avoiding an increase in the weight or thickness of the beam.

A crash management system according to the invention is a crash management system for a motor vehicle, the vehicle having a longitudinal direction X, a transverse direction Y extending perpendicular to the longitudinal direction X, and a vertical direction Z extending perpendicular to a plane spanned by the longitudinal direction X and the transverse direction Y, the crash management system comprising a bumper cross member extending along the transverse direction and having an outer belt, an inner belt and at least two transverse walls, which connect the outer belt to the inner belt and form a closed hollow profile, two crash boxes connecting said bumper cross member to a vehicle structure wherein the outer belt comprises at least one opening next to one crash box in which at least one reinforcing element is inserted through the closed hollow profile, and wherein the at least one reinforcing element comes in close contact with the inner belt.

In the context of the invention, the expression in close contact means that the at least one reinforcing element theoretically comes into abutment with the wall with which it is in close contact, but that to meet the shape tolerances considered by the person skilled in the art, a spacing of 1 to 2 millimeters maximum can be present between this close wall and the at least one reinforcing element. In this way, the tolerance accepted in the field for the shape tolerance can be anticipated.

The at least one reinforcing element according to the invention stiffens the bumper cross member on areas where it is needed, in particular where the bumper cross member is in contact with the crash box, and allows the crash management system to sustain higher amount of forces and to avoid failures. This may be particularly advantageous in the case of crash management systems where the bumper cross member has thin walls, or where the bumper cross member is deep in the longitudinal direction X, or where the bumper cross member has holes drilled in its outer belt and/or in its inner belt to allow the insertion of assembly tools. In all these cases, bumper cross members have weaknesses, which the invention makes it possible to compensate for.

Advantageously, the at least one reinforcing element overlaps the nearby crash box along the transverse direction Y by a distance D. The distance D is measured in relation to the positions of the at least one reinforcing element, and corresponds to the distance between the vertical outer wall of the at least one reinforcing element and the vertical inner wall of the crash box according to the transverse direction Y. In the scope of the invention the vertical inner wall of the crash box means the vertical wall placed on the inner side of the vehicle, when the crash box is positioned in the crash management system. Similarly, in the scope of the invention, the vertical outer wall of the reinforcing element means the vertical wall placed on the outside of the vehicle, when the reinforcing element is positioned in the bumper cross member. This overlapping position allows to adapt the solution to the type of crash management system. In the scope of the invention, the distance D is always greater than zero millimeters.

According to two different embodiments of the invention, the reinforcing element can be inserted along an axis that is parallel or oblique to the longitudinal direction X. This allows the energy created during an impact to be directed in the direction best suited to the crash management system in which the reinforcing element is inserted.

The at least one reinforcing element of the invention has a width I measured between the vertical outer wall and the vertical inner wall of the reinforcing element. The distance (D) is less than the width (I). The crash box always overlaps part of the reinforcing element's width I along the transverse direction Y, but never completely covers it. In cases where the reinforcement element is completely covered by the crash box along the transverse direction Y (D greater than or equal to I), or is not covered by the crash box along the transverse direction Y (D equal to zero), then on particular areas where the bumper cross member is in contact with the crash box, the crash management system will not sustain higher amount of forces and failures will occur.

According to one embodiment of the invention, the inner belt of the bumper cross member comprises at least one opening smaller than the at least one opening located on the outer belt of the bumper cross member. In this way, when the at least one reinforcing element is inserted through the opening on the outer belt, it comes to rest on the rear belt, i.e. it does not come out through the hole on the inner belt. This positions the at least one reinforcing element in the bumper cross member.

The at least one opening located on the outer belt has a geometric shape with a point of symmetry A. Similarly, the least one opening located on the inner belt has a geometric shape with a point of symmetry B. In a preferred embodiment, the point of symmetry A is aligned with the point of symmetry B according to an axis parallel to the longitudinal direction (X). In one other embodiment the point of symmetry A is aligned with the point of symmetry B along an axis oblique to the longitudinal direction X. In this particular embodiment, the at least one reinforcing element is in an oblique position according to the longitudinal direction X. This permits great flexibility in positioning the at least one reinforcing element according to the type of crash management system, for example according to the height of the bumper cross member or crash box.

In one embodiment of the invention the at least one reinforcing element is a closed hollow profile. It has the advantage to limit the weight of the crash management system.

In a particular embodiment where the bumper cross member comprises at least one internal wall making that the bumper cross member is a multi-chambered hollow profile, the internal wall is cut so that the at least one reinforcing element could be inserted through the bumper cross member and all its chambers.

Preferably, the at least one reinforcing element is either welded or glued or pressed to the outer belt of the bumper cross member.

For disposing the reinforcing element in the bumper cross member in a captive and nonrotating manner, it is preferred that the geometric shape of the at least one opening located on the outer belt of the bumper cross member and of the at least one reinforcing element match to each other. Preferably the edges of the at least one opening located on the outer belt and of the at least one reinforcing element of the at least one reinforcing element are rounded.

In a one embodiment of the invention the geometric shape of least one opening located on the outer belt and/or the geometric shape of the at least one opening located on the inner belt are/is circular.

In one other embodiment of the invention the geometric shape of least one opening located on the outer belt and/or the geometric shape of the at least one opening located on the inner belt are/is a rectangular shape with rounded edges.

As well as preventing twisting of the at least one reinforcing element in the bumper cross member, this defines a single insertion position in the bumper cross member. According to one embodiment of the invention the at least one reinforcing element has a first end-cut in abutment with the outer belt of the bumper cross member and a second end-cut in close contact with the inner belt of the bumper cross member. This allows the reinforcing element to be stabilized in the bumper cross member.

In one embodiment of the invention, the first end of the at least one reinforcing element is prolonged by a flange extending around the circumference of the at least one reinforcing element and positioned in contact with the outer belt of the bumper cross member, so that this flange remains outside the bumper cross member, i.e. it is a part of the at least one reinforcing element that is not inserted into the bumper cross member. This embodiment brings the advantage of positive locking and support of the at least one reinforcing element in the bumper cross member. The flange can also help to fix the part to the bumper cross member, by welding or gluing or pressing.

In one embodiment of the invention the at least one reinforcement element is made from an aluminum alloy. Preferably the at least one reinforcing element is an extruded hollow profile.

According to the invention the bumper cross member is a hollow profile made from an aluminum alloy. According to two different modes of the invention, the bumper cross member can be made from an extruded profile or a profile from rolled formed sheet.

According to certain modes of the invention the beam may be straight or slightly curved slightly along the transverse direction Y.

### BRIEF DESCRIPTION OF THE DRAWINGS

Fig. 1 a perspective illustration of a crash management system for a motor vehicle according to one embodiment of the invention.
Fig. 2 is a perspective view from below along sectional plane C-C' of the embodiment shown in Figure 1.
Fig. 3 is an illustration of a bumper cross member of an embedment of the invention.
Fig. 4 illustrates a view from above of one side of a crash management system according to the invention.

### DETAILED DESCRIPTION

Identical elements or elements with the same function have been provided with the same reference numbers in the figures.

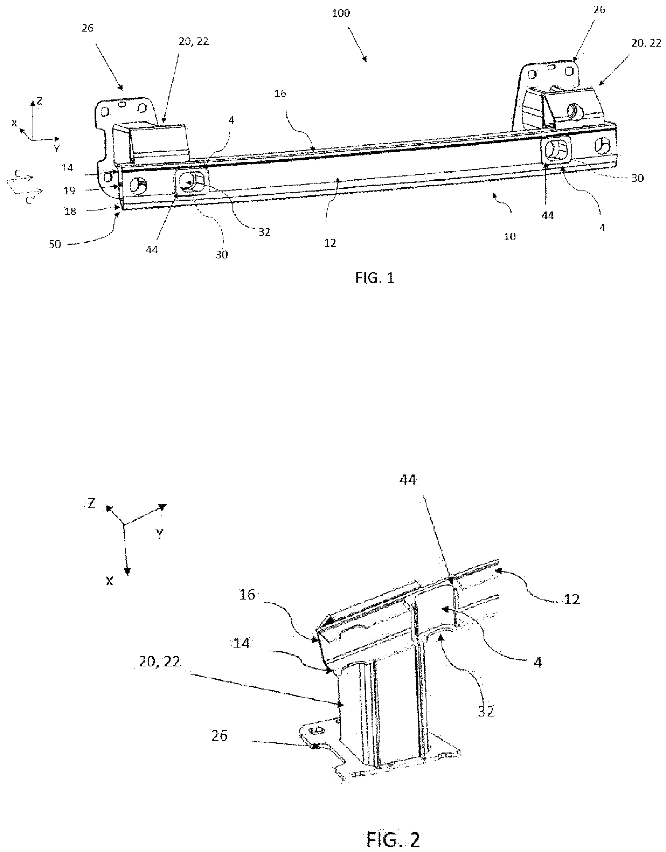

Fig. 1 shows the essential components of a crash management system 100 for a motor vehicle. The crash management system 100 can be arranged both at the vehicle front and the vehicle rear of the motor vehicle (not shown).

As shown in Fig. 1, the crash management system 100 has a longitudinal direction X, a transverse direction Y extending perpendicular to the longitudinal direction X, and a vertical direction Z extending perpendicular to a plane spanned by the longitudinal direction X and the transverse direction Y and perpendicular to the drawing plane of Fig. 1.

The crash management system 100 comprises a bumper cross member 10, which is preferably, but without being limited thereto, made of aluminum or an aluminum alloy and typically two crash boxes 20, 22, which are spaced apart from each other. The bumper cross member 10 is preferably formed as an extrusion component. The cross member 10, which extends substantially in the transverse direction Y, may furthermore be curved in regions, as is known per se from the prior art.

The two crash boxes 20, 22 can be identical or different in the case where one of them contains a system allowing the connection of a towing eye element. They allow the bumper cross member 10 to be attached to a vehicle structure (longitudinal beam) of the vehicle (not shown), directly or via fixing plates 26 as shown on figures 1 and 2.

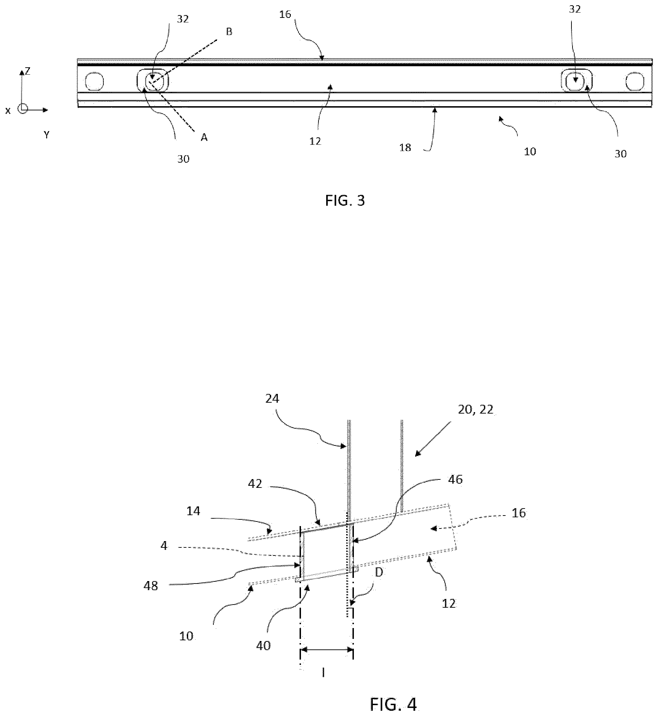

As shown in figures 1 and 3, the bumper cross member 10 has an outer belt 12 on the side facing the vehicle front (not shown) and an inner belt 14 on the side facing the inside of the vehicle (not shown). Two transverse walls 16 and 18 connect the outer belt 12 to the inner belt 14 and they form together a closed hollow profile 50. The hollow profile 50 can have one or more chambers as required. The bumper cross member10 depicted in figures 1 and 3 has an internal wall 19 dividing the hollow profile 50 along the length of the bumper cross member 10 in the Y direction into a multi-chamber hollow profile.

In the illustrated embodiment examples of figures1 and 2 a reinforcing element 4 is inserted through the closed hollow profile 50 via one opening 30 in the outer belt 12 of bumper cross member 10. The reinforcing element 4 is inserted along an axis that is parallel to the longitudinal direction X.

The reinforcing element 4 is prolonged in this embodiment by a flange 44 around then circumference of the reinforcing element 4. The flange 44, does not form part of the inserted part of the reinforcing element and remains outside the closed hollow profile 50, The flange 44 is positioned in contact with the outer belt 12 of the bumper cross member 12. The flange 44 serves as a means of supporting the reinforcing element 4 and may also serve as a means of fixing to bumper cross member 10. A second opening 32, smaller than the first opening 30, is located on the inner belt 14 of the bumper cross member 10.

The perspective view from below along sectional plane C-C' shown in figure 1 represents the reinforcing element 4 coming into abutment on the inner belt 14 around the second opening 32 located on the inner belt 14.

Figure 3 shows the bumper cross member 10 without the reinforcement element 4. The openings 30 and 32 on the outer belt 12 and inner belt 14 are shown with their respective points of symmetry A and B. When the opening is circular, the point of symmetry corresponds to the center of the circle. In Figure 3, the symmetry points A and B are aligned along an axis parallel to the longitudinal direction X.

Figure 4 shows a transparent view of the bumper cross member from above so that the reinforcement element 4 can be seen in its inserted position in the bumper cross member 10. The reinforcing element 4 overlaps the crash box 20, 22 along the transverse direction Y by a distance D. The distance D corresponds to the distance between the vertical outer wall 46 of the reinforcing element 4 and the vertical inner wall 24 of the crash box 20, 22 according to the transverse direction Y. The reinforcing element has a width I corresponding to the distance between the vertical outer wall 46 and the vertical inner wall 48 of the reinforcing element 4. The distance D is smaller than the distance I. The reinforcing element 4 has a first end-cut 40 in abutment with the outer belt 12 of the bumper cross member 10 and a second end-cut 42 in close contact with the inner belt 14 of the bumper cross member 10. Theoretically, the reinforcing element comes into abutment with the inner belt 12, but that to meet the shape tolerances, a spacing of 1 to 2 millimeters maximum can be admitted. In this way, the tolerance accepted in the field for the shape tolerance can be anticipated.

The crash management system 100 described thus far can be modified or altered in a variety of ways without departing from the essence of the invention.

### List of reference

- 4: Reinforcing element
- 10: Bumper cross member
- 12: Outer belt
- 14: Inner belt
- 16: Transverse wall
- 18: Transverse wall
- 19: Internal wall
- 20: Crash box
- 22: Crash box
- 24: Crash box vertical inner wall
- 26: Fixing plate
- 30: Opening on the outer belt
- 32: Opening on the inner belt I
- 40: First end cut
- 42: Second end cut
- 44: Flange
- 46: Vertical outer wall
- 48: Vertical inner wall
- 50: Closed hollow profile
- 100: Crash management system
- D: Distance
- I: Width
- X: Longitudinal direction
- Y: Transverse direction
- Z: Vertical direction

## Claims

1. A crash management system (100) for a motor vehicle, the vehicle having a longitudinal direction (X), a transverse direction (Y) extending perpendicular to the longitudinal direction (X), and a vertical direction (Z) extending perpendicular to a plane spanned by the longitudinal direction (X) and the transverse direction (Y), the crash management system (100) comprising a bumper cross member (10) extending along the transverse direction (Y) and having an outer belt (12), an inner belt (14) and at least two transverse walls (16; 18), which connect the outer belt (12) to the inner belt (14) and form a closed hollow profile (50), two crash boxes (20, 22) connecting said bumper cross member (10) to a vehicle structure (1),
**characterized in that**
the outer belt (12) comprises at least one opening (30) next to one crash box (20, 22) in which at least one reinforcing element (4) is inserted through the closed hollow profile (50), and **in that** the at least one reinforcing element (4) comes into close contact with the inner belt (14).

2. A crash management system (100) according to claim 1 wherein the at least one reinforcing element (4) overlaps the nearby crash box (20, 22) along the transverse direction (Y) by a distance (D).

3. A crash management system (100) according to claim 2 wherein the at least one reinforcing element (4) has a width (I) and wherein the distance (D) is less than the width (I).

4. A crash management system (100) according to anyone of claim 1 to 3 wherein the inner belt (14) comprises at least one opening (32) smaller than the at least one opening (30) located on the outer belt (12) of the bumper cross member (10).

5. A crash management system (100) according to anyone of claim 1 to 4 wherein the at least one opening (30) has a geometric shape with a point of symmetry (A) and the at least one opening (32) has a geometric shape with a point of symmetry (B) and the point of symmetry (A) is aligned with the point of symmetry (B) according to an axis parallel to the longitudinal direction (X).

6. A crash management system (100) according to anyone of claim 1 to 4 the point of symmetry (A) is aligned with the point of symmetry (B) along an axis oblique to the longitudinal direction (X).

7. A crash management system (100) according to anyone of the claim 1 to 6 wherein the at least one reinforcement element (4) is a closed hollow profile.

8. A crash management system (100) according to anyone of claim 1 to 7 wherein the at least one reinforcement element (4) has a first end cut (40) in abutment with the outer belt (12) and a second end cut (42) in close contact with the inner belt (14).

9. A crash management system (100) according to anyone of claim 1 to 8 wherein the at least one reinforcement element (4) is welded or glued or pressed to the outer belt (12).

10. A crash management system (100) according to anyone of claim 1 to 9 wherein the geometric shape of the at least one opening (30) and the geometric shape of the at least one reinforcing element (4) match to each other.

11. A crash management system (100) according to anyone of claim 1 to 10 wherein the geometric shape of least one opening (30) and/or the geometric shape of the at least one opening (32) are/is circular.

12. A crash management system (100) according to anyone of claim 1 to 10 wherein the at least one opening (30) or/and the at least one opening (32) have a rectangular shape with rounded edges.

13. A crash management system (100) according to anyone of claim 1 to 12 wherein the at least one reinforcing element (4) is prolonged by a flange (44) extending around the circumference of the at least one reinforcing element (4) and positioned in contact with the outer belt (12).

14. A crash management system (100) according to anyone of claim 1 to 13 wherein the at least one reinforcement element (4) is made from an aluminum alloy.

15. A crash management system (100) according to anyone of claim 1 to 14 wherein the at least one reinforcement element (4) is extruded hollow profile.
